# EUROPÄISCHE PATENTSCHRIFT

(11) **EP 1 612 435 B1**
(45) Veröffentlichungstag und Bekanntmachung des Hinweises auf die Patenterteilung: **22.10.2008**
(21) Anmeldenummer: 04015181.3
(22) Anmeldetag: 29.06.2004
(51) Int. Cl.: F16C 13/00, B65H 27/00, B65H 23/24

(54) **Walze**
Roll
Rouleau

(43) Veröffentlichungstag der Anmeldung: 04.01.2006
(73) Patentinhaber: van Baal, Josef, 40670 Meerbusch (DE)
(72) Erfinder: van Baal, Josef, 40670 Meerbusch (DE)
(74) Vertreter: DR. STARK & PARTNER

(56) Entgegenhaltungen:
- EP-A- 0 686 781
- DE-A- 3 218 388
- DE-A- 3 940 744
- DE-A- 19 936 077
- DE-U- 8 220 400

## Beschreibung

Die Erfindung betrifft eine Walze für die Herstellung und/oder Bearbeitung von sehr dünnen Folien oder dergleichen, mit einer außenseitig drehbar gelagerten und insbesondere antreibbaren Achse und einem auf der Achse drehfest abgestützten, von einem Wärmetauschmedium durchströmbaren Doppelmantel, der einen Innenmantel, eine außenseitig darauf angebrachte innere Stützstruktur und einen auf dieser angebrachten Außenmantel aufweist.

Aus der Praxis sind derartige Walzen in verschiedenen Ausführungen bekannt, die unter anderem auch für die Herstellung und/oder Bearbeitung von sehr dünnen Folien eingesetzt werden. Solche Walzen sind in der Regel als eine Doppelmantelkonstruktion aufgebaut, bei der ein zumeist innengedrehter oder gebohrter, bisweilen auch geräumter oder genuteter, Mantel auf einen Innenkörper mit Leitspiralen für das Wärmetauschmedium aufgeschrumpft oder verschweißt ist.

Durch die im Walzenspalt auftretenden Kräfte ist die Verformung solcher Walzen derart, dass die Walzen bogenförmig deformiert werden und eine sogenannte Biegung bzw. Biegelinie auftritt, aufgrund derer die Spaltdicke in der Walzenmitte deutlich größer ist als an den Rändern der Walze.

Da die Verformung aufgrund der nur randseitigen Lagerung der Walze in der Walzenmitte am größten, muss bei allen bisher in der Praxis eingesetzten Systeme zum Ausgleich solcher Verformungen auch ein entsprechend starker Ausgleich erfolgen.

Bei üblichen Einsatzzwecken derartiger Walzen wird eine aus einer Düse oder einem Extruder kommende Kunststoffschmelze oder ein entsprechender Kunststoffmaterialvortrag in einem Spalt zwischen zwei Walzen geglättet bzw. kalandriert. Im Kalander wird ein Walzenspalt mit einer noch nicht vollplastifizierten Kunststoffschmelze, beschickt, die somit zunächst plastifiziert und in weiteren Spalten homogenisiert und auf eine Solldicke umgeformt wird. Beim Glättwerksprozess hingegen wird eine vollplastifizierte Kunststoffschmelze über eine als Breitschlitzwerkzeug ausgebildete Düse unmittelbar an den Glättspalt herangeführt. Die Glättwalzen bilden dabei einen möglichst parallelen Spalt geringer Spaltdicke, durch den Folien mit möglichst minimaler Dickentoleranz erzeugt werden sollen.

Nachteilig hierbei ist, dass neben den hohen Anforderungen an die Formstabilität der Walze auch noch erhöhte Ansprüche an die Temperierbarkeit der Walzen gestellt werden, da die Beheizung bzw. Kühlung der Walzen zur Erzielung bestimmter , je nach Eigenart der verwendeten Rohstoffe variierender, Folien- und Produkteigenschaften von besonderer Bedeutung ist.

DE 4205167 A1 offenbart eine Walze, bei der der Doppelmantel über zwei Kugelgelenkleger auf der Achse der Walze abgestützt ist.

Aufgabe der Erfindung ist es, die vorgenannten Nachteile zu vermeiden und eine Walze der eingangs genannten Art anzugeben, die bei guten Temperiereigenschaften eine ausreichend hohe Formstabilität aufweist, um einen möglichst parallelen Spalt mit geringer Spaltdicke zu gewährleisten.

Diese Aufgabe wird gelöst durch eine Walze, die die Merkmale des Anspruchs 1 aufweist.

Hierdurch wird erreicht, dass die Walzenmitte nicht - wie bei üblichen Walzen - die Stelle mit der größten Spaltabweichung ist, sondern die Stelle mit der kleinsten Spaltabweichung bei mittiger Abstützung oder aber zumindest einer gegenüber üblichen Walzen sehr stark verringerten Spaltabweichung bei zwei Abstützungen.

Bei zwei abgestützten Stellen können diese auf der Achse gleichmäßig zwischen den äußeren Randbereichen des Doppelmantels angeordnet sein, so dass jeweils ein Drittle der Walzenlänge seitlich der Abstützungen und ein Drittel der Walzenlänge zwischen den Abstützungen vorgesehen ist.

Dabei ist jede auf der Achse abgestützte Stelle als eine auf die Achse bezogen umfangsmäßig umlaufende flächige Abstützung ausgebildet, so dass eine unabhängig vom Drehwinkel gleichmäßige Abstützung gegeben ist. Es kann aber auch eine in Umfangsrichtung gleichmäßige Abstützung mittels einer Anzahl von entlang des Umfangs voneinander beabstandet angeordneter vorgesehener Stützeinrichtungen erfolgen.

Erfindungsgemäß weist die Stützstruktur zwischen Innen- und Außenmantel Stützelemente auf, die zumindest einen in etwa spiraligen Strömungskanal zur geführten Leitung des Wärmetauschmediums bilden.

Insbesondere können mehrere spiralige Strömungskanäle vorgesehen und als eine mehrsträngige Wendel ausgebildet sein, die entweder im Gleich- oder im Gegenstromprinzip gestaltet sein können, so dass eine optimale Temperiereigenschaft der Walze gegeben ist. Dabei kann auch der Spiralabstand variabel ausgebildet sein, so dass z. B. durch eine degressive Spirale mit sich verringerndem Spiralabstand eine höhere Strömungsgeschwindigkeit des durch bereits erfolgte Wärmeaufnahme bzw. -abgabe um eine Teil seiner Temperierfähigkeit reduzierten Wärmetauschmediums zur Gewährleistung einer entlang des Strömungsweges einheitlichen Temperiereigenschaft bewirkt wird.

Der Bereich zwischen der Innenfläche des Doppelmantels und der Achse ist ebenfalls mit einem Wärmetauschmedium durchströmbar, so dass eine nochmals einheitlichere Temperierung der Walzer möglich ist.

Um einen lediglich einseitigen Anschluss für das Wärmetauschmedium zu erzielen, und somit eine bessere Bedienbarkeit der Walze zu erreichen, kann eine koaxiale Zu- bzw. Ableitung des Wärmetauschmediums vorgesehen sein.

Erfindungsgemäß kann eine Einrichtung zur Biegelinienkompensation vorgesehen sein, um somit auch die ggf. verbleibenden minimalen Deformationen aufgrund der einsatzbedingten Belastungen auszugleichen.

Hierzu können die äußeren Randbereiche des Doppelmantels gegenüber der Lagerung der Achse separat gelagert sein und die relative Position der Lagerungen von Achse einerseits und äußeren Randbereichen des Doppelmantels andererseits kann auf die Achse bezogen radial veränderbar sein insoweit kann durch Verlagerung der Achs-Lagerungen die Spaltdicke für die Randbereiche der Walze eingestellt werden und bei Auftreten einer Biegelinie diese durch Relativverlagerung der Lagerungen des Doppelmantels kompensiert werden. Insoweit ist auch eine Anpassung der entsprechend ausgerüsteten Walze an die Biegelinie einer anderen, den Walzenspalt mitbildenden Walze möglich.

Vorteilhafterweise können die äußeren Randbereiche zwischen der Achse und dem Doppelmantel jeweils durch zumindest eine, insbesondere einstellbar ausgebildete, O-Ring-Abdichtung gegen Austritt des Wärmetauschmediums gesichert sein, so dass jederzeit eine einfache und problemlose Wartung oder Reparatur der Walze möglich ist.

Weiterhin können der Innenmantel und der Außenmantel durch zumindest eine O-Ring-Abdichtung gegen Austritt des Wärmetauschmediums gesichert sein, wobei der Innenmantel und der Außenmantel jeweils mit einer O-Ring-Nut versehen sind, in denen der O-Ring jeweils anteilig angeordnet ist, so dass die Dichtwirkung nochmals verbessert wird.

Die O-Ringe können dabei auf die Anforderungen des Wärmetauschmediums, z. B. Wasser oder Öl, und die jeweiligen Einsatzparameter, wie z. B. Druck oder Temperatur, abgestimmt sein.

Die Erfindung betrifft weiterhin eine Vorrichtung für die Herstellung und/oder Bearbeitung von sehr dünnen Folien oder dergleichen, mit zwei in geringem Abstand zueinander angeordneten Walzen.

Die bereits eingangs beschriebene Aufgabe wird dadurch gelöst, dass zumindest eine Walze erfindungsgemäß ausgebildet ist.

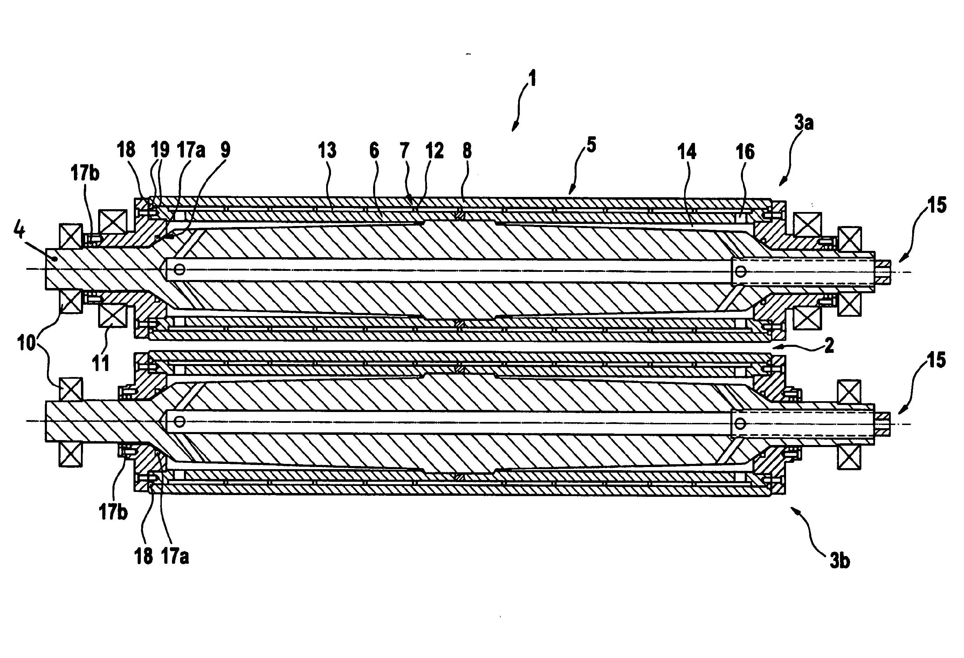

Im Folgenden wird ein in der Zeichnung dargestelltes Ausführungsbeispiel der Erfindung erläutert.

Die einzige Figur zeigt eine Vorrichtung 1 für die Herstellung und/oder Bearbeitung von sehr dünnen Folien oder dergleichen, mit zwei in geringem Abstand zueinander angeordneten und einen Walzenspalt 2 zwischen sich bildenden Walzen 3.

Dabei sind sowohl die in der Zeichnung an oberer Stelle dargestellte Walze 3a als auch die in der Zeichnung an unterer Stelle dargestellte Walze 3b jeweils mit einer außenseitig drehbar gelagerten und insbesondere antreibbaren Achse 4 und einem auf der Achse 4 drehfest abgestützten Doppelmantel 5 versehen. Der Doppelmantel 5 weist einen Innenmantel 6, eine außenseitig darauf angebrachte innere Stützstruktur 7 und einen auf dieser angebrachten Außenmantel 8 auf und ist von einem in der Zeichnung nicht dargestellten Wärmetauschmedium durchströmbar.

Dabei ist jeweils der Innenmantel 6 mittig zwischen den äußeren Randbereichen der Achse 4 auf der Achse 4 abgestützt und an den äußeren Randbereichen der Walze 3 ist zwischen der Achse 4 und dem Doppelmantel 5 ein im unbelasteten Zustand umfangsmäßig umlaufender Spalt 9 vorgesehen ist.

Die in der Zeichnung an oberer Stelle dargestellte Walze 3a weist eine Einrichtung zur Biegelinienkompensation auf, wobei die äußeren Randbereiche des Doppelmantels 5 gegenüber der Lagerung 10 der Achse 4 separat in Lagerungen 11 gelagert sind und die relative Position der Lagerungen 10, 11 von Achse 4 einerseits und äußeren Randbereichen des Doppelmantels 5 andererseits auf die Achse 4 bezogen radial veränderbar ist. Dadurch kann sowohl die ggf. auftretende Biegelinie dieser Achse 4 kompensiert werden und es ist ein Ausgleich der Biegelinie der in der Zeichnung an unterer Stelle dargestellte Walze 3b möglich. Der Walzenspalt 9 ist in einem solchen Fall zwar gewölbt, hat aber eine über die Spaltbreite einheitliche Spaltdicke.

Alternativ zu der in der Zeichnung dargestellten Anordnung kann der Innenmantel 6 auch an zwei im gleichen Abstand zur Mitte der Achse 4 angeordneten Stellen auf der Achse 4 abgestützt sein. Dabei können diese zwei abgestützten Stellen auf der Achse 4 gleichmäßig zwischen den äußeren Randbereichen des Doppelmantels 5 angeordnet sein.

Die innere Stützstruktur 7 des Doppelmantels 6 weist Stützelemente 12 auf, die zumindest einen in etwa spiraligen Strömungskanal 13 zur geführten Leitung des Wärmetauschmediums bilden. Dabei können auch mehrere spiralige Strömungskanäle 13 vorgesehen und als eine mehrsträngige Wendel ausgebildet sein, um eine bessere Temperierfähigkeit der Walze 3 zu gewährleisten. Durch entsprechende Bohrungen im Innenmantel 6 der Walze 3 ist auch der Bereich 15 zwischen der Innenfläche des Doppelmantels 5 und der Achse 4 mit einem Wärmetauschmedium durchströmbar. Dabei tritt das Wärmetauschmedium durch den seitlichen koaxialen Anschluss 15 ein und wird nach Verlassen der inneren Achse 4 in den Bereich 15 zwischen der Innenfläche des Doppelmantels 5 und der Achse 4 geleitet. Über Bohrungen 16 im Innenmantel 6 wird das Wärmetauschmedium in die Strömungskanäle und aus diesen wieder heraus geführt und verlässt die Walze 3 dann wieder über den seitlichen koaxialen Anschluss 15.

Da durch die zentrale Abstützung des Doppelmantels 5 auf der Achse 4 eine Relativbewegung zwischen Achse 4 und Doppelmantel 5 innerhalb der durch den Spalt 9 vorgegeben Grenze erfolgen kann, sind die äußeren Randbereiche der Walze 3 jeweils durch zwei zwischen der Achse 4 und dem Doppelmantel 5, insbesondere einstellbar ausgebildete, O-Ring-Abdichtungen 17 gegen Austritt des Wärmetauschmediums gesichert, von denen die innere direkt am konischen Übergang Achsstummels zur Ausbildung der inneren Achse angeordnet ist und die Äußere im Bereich des Zapfens eine einstellbare doppelte O-Ring-Abdichtungen 17b ist, die neben ihrer Vorspannung noch über in der Zeichnung nicht dargestellte Madenschrauben fein justiert werden kann.

Ergänzend hierzu ist der Innenmantel 6 und der Außenmantel 8 durch zumindest eine O-Ring-Abdichtung 18 gegen Austritt des Wärmetauschmediums gesichert, wobei der Innenmantel 6 und der Außenmantel 8 jeweils mit einer O-Ring-Nut 19 versehen sind, in denen der O-Ring jeweils anteilig angeordnet ist.

## Patentansprüche

1. Walze (3) für die Herstellung und/oder Bearbeitung von sehr dünnen Folien oder dergleichen, mit einer außenseitig drehbar gelagerten und insbesondere antreibbaren Achse (4) und einem auf der Achse (4) drehfest abgestützten, von einem Wärmetauschmedium durchströmbaren Doppelmantel (5), der einen Innenmantel (6), eine außenseitig darauf angebrachte innere Stützstruktur (7) und einen auf dieser angebrachten. Außenmantel (8) aufweist, bei der zum einen entweder der Innenmantel (6) mittig zwischen den äußeren Randbereichen der Achse (4) auf der Achse (4) abgestützt ist und dass an den äußeren Randbereichen zwischen der Achse (4) und dem Doppelmantel (5) ein im unbelasteten Zustand umfangsmäßig umlaufender Spalt (9) vorgesehen ist oder aber der Innenmantel (6) an zwei im gleichen Abstand zur Mitte der Achse (4) angeordneten Stellen auf der Achse (4) abgestützt ist und dass an den äußeren Randbereichen zwischen der Achse (4) und dem Doppelmantel (5) ein im unbelasteten Zustand umfangsmäßig umlaufender Spalt (9) vorgesehen ist,
und zum anderen jede auf der Achse (4) abgestützte Stelle als eine auf die Achse (4) bezogen umfangsmäßig umlaufende flächige Abstützung ausgebildet ist.

2. Walze (3) nach Anspruch 1 , **dadurch gekennzeichnet, dass** bei zwei abgestützten Stellen diese auf der Achse (4) gleichmäßig zwischen den äußeren Randbereichen des Doppelmantels (5) angeordnet sind.

3. Walze (3) nach einem der Ansprüche 1 und 2, **dadurch gekennzeichnet, dass** die Stützstruktur (7) Stützelemente (12) aufweist, die zumindest einen in etwa spiraligen Strömungskanal (13) zur geführten Leitung des Wärmetauschmediums bilden.

4. Walze (3) nach Anspruch 3, **dadurch gekennzeichnet, dass** mehrere spiralige Strömungskanäle (13) vorgesehen und als eine mehrsträngige Wendel ausgebildet sind.

5. Walze (3) nach einem der Ansprüche 1 bis 4, **dadurch gekennzeichnet, dass** der Bereich zwischen der Innenfläche des Doppelmantels (5) und der Achse (4) mit einem Wärmetauschmedium durchströmbar ist.

6. Walze (3) nach einem der Ansprüche 1 bis 5, **dadurch gekennzeichnet, dass** eine Einrichtung zur Biegelinienkompensation vorgesehen ist.

7. Walze (3) nach Anspruch 6, **dadurch gekennzeichnet, dass** die äußeren Randbereiche des Doppelmantels (5) gegenüber der Lagerung (10) der Achse (4) separat gelagert und die relative Position der Lagerungen (410, 11) von Achse (4) einerseits und äußeren Randbereichen des Doppelmantels (5) andererseits auf die Achse (4) bezogen radial veränderbar ist.

8. Walze (3) nach einem der Ansprüche 1 bis 7, **dadurch gekennzeichnet, dass** die äußeren Randbereiche zwischen der Achse (4) und dem Doppelmantel (5) jeweils durch zumindest eine, insbesondere einstellbar ausgebildete, O-Ring-Abdichtung (17) gegen Austritt des Wärmetauschmediums gesichert sind.

9. Walze (3) nach einem der Ansprüche 1 bis 8, **dadurch gekennzeichnet, dass** der Innenmantel (6) und der Außenmantel (8) durch zumindest eine O-Ring-Abdichtung (18) gegen Austritt des Wärmetauschmediums gesichert sind, wobei der Innenmantel (6) und der Außenmantel (8) jeweils mit einer O-Ring-Nut (19) versehen sind, in denen der O-Ring jeweils anteilig angeordnet ist.

10. Vorrichtung (1) für die Herstellung und/oder Bearbeitung von sehr dünnen Folien oder dergleichen, mit zwei in geringem Abstand zueinander angeordneten Walzen (3), **dadurch gekennzeichnet, dass** zumindest eine Walze (3) gemäß den Ansprüchen 1 bis 9 ausgebildet ist.

## Claims

1. Roll (3) for the manufacture and/or processing of very thin foils or the like, the said roll including a shaft (4), which is rotatably mounted exteriorly and, in particular, is driveable, and a double mantle (5), which is non rotatably supported on the shaft (4), is traversable by a heat exchanging medium and includes an inner mantle (6), an internal support structure (7) that is mounted on the outside of the said inner mantle and an outer mantle (8) that is mounted on the said internal support structure, where, on the one hand, the inner mantle (6) is either supported on the shaft (4) in the centre between the outer edge regions of the shaft (4) and in that at the outer edge regions between the shaft (4) and the double mantle (5) there is provided a gap (9) that in the unloaded state is peripherally circumferential, or the inner mantle (6) is supported on the shaft (4) at two points disposed at an identical distance from the centre of the shaft (4) and in that at the outer edge regions between the shaft (4) and the double mantle (5) there is provided a gap (9) that in the unloaded state is peripherally circumferential, and where, on the other hand, each point supported on the shaft (4) is in the form of a flat supporting means that, with reference to the shaft (4), is peripherally circumferential.

2. Roll (3) according to claim 1, **characterised in that** where there are two supported points, the said points are disposed on the shaft (4) equally between the outer edge regions of the double mantle (5).

3. Roll (3) according to one of claims 1 and 2, **characterised in that** the support structure (7) includes support elements, which form at least one approximately spiral flow channel (13) for the guided conducting of the heat exchanging medium.

4. Roll (3) according to claim 3, **characterised in that** a plurality of spiral flow channels (13) are provided and are in the form of a multi-stranded helix.

5. Roll (3) according to one of claims 1 to 4, **characterised in that** the region between the inner surface of the double mantle (5) and the shaft (4) is traversable by a heat exchanging medium.

6. Roll (3) according to one of claims 1 to 5, **characterised in that** a device is provided for compensating the elastic line.

7. Roll (3) according to claim 6, **characterised in that** the outer edge regions of the double mantle (5) are mounted separately opposite the bearing (10) of the shaft (4) and the relative position of the bearings ( 10, 11 ) from shaft (4) on one side and outer edge regions of the double mantle (5) on the other side is radially modifiable with reference to the shaft (4).

8. Roll (3) according to one of claims 1 to 7, **characterised in that** the outer edge regions between the shaft (4) and the double mantle (5) are each secured by means of at least one O ring seal (17) against the discharge of heat exchanging medium, the said O ring seal being more especially adjustable.

9. Roll (3) according to one of claims 1 to 8, **characterised in that** the inner mantle (6) and the outer mantle (8) are secured against the discharge of the heat exchanging medium by means of at least one O ring seal (18), wherein the inner mantle (6) and the outer mantle (8) are each provided with an O ring groove (19), in which each 0 ring is proportionately disposed.

10. Apparatus (1) for the manufacture and/or processing of very thin foils or the like, the said apparatus including two rolls (3) disposed at a small spacing one from the other, **characterised in that** at least one roll (3) is configured according to claims 1 to 9.

## Revendications

1. Rouleau (3) pour la fabrication et/ou le traitement de feuilles très minces ou analogues, avec un axe (4) monté à rotation du côté extérieur et notamment pouvant être entraîné, et avec une enveloppe double (5) soutenue en solidarité de rotation sur l'axe (4) et à travers laquelle peut s'écouler un fluide d'échange thermique, laquelle présente une enveloppe intérieure (6), une structure intérieure de soutien (7) installée sur le côté extérieur de l'enveloppe intérieure, et une enveloppe extérieure (8) installée sur la structure de soutien,
selon lequel, d'une part, soit l'enveloppe intérieure (6) est soutenue sur l'axe (4) au milieu entre les régions de bords extérieurs de l'axe (4) et une fente (9) périphériquement entourante dans l'état non sollicité est prévue sur les régions de bords extérieurs entre l'axe (4) et l'enveloppe double (5), soit l'enveloppe intérieure (6) est soutenue sur l'axe (4) en deux points disposés à égale distance du milieu de l'axe (4) et une fente (9) périphériquement entourante dans l'état non sollicité est prévue sur les régions de bords extérieurs entre l'axe (4) et l'enveloppe double (5),
et, d'autre part, chaque point soutenu sur l'axe (4) est réalisé sous la forme d'un appui surfacique périphériquement entourant relativement à l'axe (4).

2. Rouleau (3) selon la revendication 1, **caractérisé en ce que,** en présence de deux points soutenus, ces points sont disposés uniformément entre les régions de bords extérieurs de l'enveloppe double (5).

3. Rouleau (3) selon l'une des revendications 1 et 2, **caractérisé en ce que** la structure de soutien (7) présente des éléments de soutien (12) qui forment au moins un conduit d'écoulement (13) approximativement en hélice pour la conduite dirigée du fluide d'échange thermique.

4. Rouleau (3) selon la revendication 3, **caractérisé en ce qu'**il est prévu plusieurs conduits d'écoulement en hélice (13), qui sont réalisés sous la forme d'une hélice multiple.

5. Rouleau (3) selon l'une des revendications 1 à 4, **caractérisé en ce que** la région entre la face intérieure de l'enveloppe double (5) et l'axe (4) peut être traversée par un flux de fluide d'échange thermique.

6. Rouleau (3) selon l'une des revendications 1 à 5, **caractérisé en ce qu'**il est prévu un dispositif de compensation de courbes de flexion.

7. Rouleau (3) selon la revendication 6, **caractérisé en ce que** les régions de bords extérieurs de l'enveloppe double (5) sont montées séparément par rapport au palier de montage (10) de l'axe (4), et la position relative des paliers de montage (10, 11) de l'axe (4) d'une part et des régions de bords extérieurs de l'enveloppe double (5) d'autre part peut être modifiée radialement relativement à l'axe (4).

8. Rouleau (3) selon l'une des revendications 1 à 7, **caractérisé en ce que** les régions de bords extérieurs entre l'axe (4) et l'enveloppe double (5) sont respectivement protégées de l'échappement de fluide d'échange thermique par au moins un joint torique d'étanchéité (17), notamment conçu réglable.

9. Rouleau (3) selon l'une des revendications 1 à 8, **caractérisé en ce que** l'enveloppe intérieure (6) et l'enveloppe extérieure (8) sont protégées de l'échappement de fluide d'échange thermique par au moins un joint torique d'étanchéité (18), sachant que l'enveloppe intérieure (6) et l'enveloppe extérieure (8) sont pourvues chacune d'une rainure (19) pour joint torique dans laquelle le joint torique est respectivement disposé pour partie.

10. Dispositif (1) pour la fabrication et/ou le traitement de feuilles très minces ou analogues, avec deux rouleaux (3) disposés à faible distance l'un de l'autre, **caractérisé en ce qu'**au moins un rouleau (3) est configuré selon les revendications 1 à 9.
